# EUROPEAN PATENT APPLICATION

(11) **EP 4 545 181 A1**
(43) Date of publication of application: **30.04.2025**
(21) Application number: 24205662.0
(22) Date of filing: 09.10.2024
(51) Int. Cl.: B01L 9/00, G01N 35/02, B01L 3/00

(54) **SAMPLE CONTAINER HOLDING DEVICE**

(30) Priority: 27.10.2023 JP 2023184941
(71) Applicant: Yokogawa Electric Corporation, Tokyo 180-8750 (JP)
(72) Inventor: IMAI, Yuya, Tokyo, 180-8750 (JP); HARAMI, Satoru, Tokyo, 180-8750 (JP)
(74) Representative: Stöckeler, Ferdinand

(57) **Abstract**

A sample container holding device that can determine the state of placement of a sample container and maintain that state when the sample container is placed in a proper state of placement is provided. The sample container holding device includes first to fourth sensors that detect the presence of the sample container in first to fourth detection lines, respectively. In the proper state of placement, a first regulator is opposed to the left of a first side edge, a second regulator is opposed to the rear of a second side edge, a third regulator is opposed to the right of a third side edge, and a fourth regulator is opposed to the front of a fourth side edge. The first detection line intersects front and rear surfaces of the first side edge. The second detection line intersects left and right surfaces of the second side edge. The third detection line intersects front and rear surfaces of the third side edge. The fourth detection line intersects left and right surfaces of the fourth side edge.

## Description

### TECHNICAL FIELD

The present disclosure relates to a sample container holding device.

### BACKGROUND

Sample container holding devices that hold sample containers are known. See, for example, Patent Literatures (PTLs) 1 to 6.

### CITATION LIST

### Patent Literatures

PTL 1: JP 2009-222634 A
PTL 2: JP 2019-116336 A
PTL 3: JP 2015-99256 A
PTL 4: JP 2009-192763 A
PTL 5: JP 2006-98286 A
PTL 6: JP 2011-180411 A

### SUMMARY

It would be helpful to provide a sample container holding device that can determine the state of placement of a sample container and maintain that state when the sample container is placed in a proper state of placement.

One aspect of the present disclosure is as follows.
[1] A sample container holding device configured to hold a sample container in a rectangular shape with first to fourth side edges clockwise in this order in top view, the sample container holding device including:
   a mount;
   first to fourth regulators;
   a first sensor configured to detect the presence of the sample container in a straight first detection line;
   a second sensor configured to detect the presence of the sample container in a straight second detection line;
   a third sensor configured to detect the presence of the sample container in a straight third detection line; and
   a fourth sensor configured to detect the presence of the sample container in a straight fourth detection line,
   wherein in a proper state of placement in which the sample container is placed on the mount, without being placed on any of the first to fourth regulators,
   the first regulator is configured to be opposed to the left of the first side edge, in order to regulate, by contact, leftward movement of the first side edge from the third side edge side to the first side edge side along the second side edge in the top view,
   the second regulator is configured to be opposed to the rear of the second side edge, in order to regulate, by contact, rearward movement of the second side edge from the fourth side edge side to the second side edge side along the first side edge in the top view,
   the third regulator is configured to be opposed to the right of the third side edge, in order to regulate, by contact, rightward movement of the third side edge,
   the fourth regulator is configured to be opposed to the front of the fourth side edge, in order to regulate, by contact, frontward movement of the fourth side edge,
   the first to fourth regulators are configured to regulate the rotation of the sample container with respect to the sample container holding device in the top view,
   the first detection line intersects front and rear surfaces of the first side edge,
   the second detection line intersects left and right surfaces of the second side edge,
   the third detection line intersects front and rear surfaces of the third side edge, and
   the fourth detection line intersects left and right surfaces of the fourth side edge.
[2] The sample container holding device according to [1], further including a fifth sensor configured to detect the presence of the sample container in a straight fifth detection line,
   wherein in the proper state of placement, the fifth detection line intersects top and bottom surfaces of the sample container.
[3] The sample container holding device according to [1] or [2], wherein each of the first to fourth sensors is a reflective sensor, and
   in the proper state of placement, the first to fourth sensors are located clockwise or counterclockwise in this order in the top view, so as to be opposed to four corners of the sample container.
[4] A sample analysis device including the sample container holding device according to any one of [1] to [3].
[5] The sample analysis device according to [4], including a mover configured to move the sample container holding device on which the sample container is placed.
[6] The sample analysis device according to [5], including an analyzer configured to analyze a sample contained in the sample container,
   wherein the mover is configured to carry, to the analyzer, the sample container holding device on which the sample container is placed.
[7] The sample analysis device according to any one of [4] to [6], including a determiner configured to determine the state of placement of the sample container on the sample container holding device, wherein
   the determiner is configured to determine that the sample container is in the proper state of placement when all the first to fourth sensors detect the presence of the sample container, and
   the determiner is configured to determine that the sample container is in an improper inclined state of placement in which the sample container is placed on at least one of the first regulator, the second regulator, the third regulator, or the fourth regulator in an inclined posture inclined with respect to a horizontal plane when one to three of the first to fourth sensors detects/detect the presence of the sample container.
[8] The sample analysis device according to [7], wherein
   the sample container holding device includes a fifth sensor configured to detect the presence of the sample container in a straight fifth detection line,
   in the proper state of placement, the fifth detection line intersects top and bottom surfaces of the sample container,
   the determiner is configured to determine that the sample container is in a state of nonplacement in which the sample container is not placed on any of the first to fourth regulators and the mount when none of the first to fifth sensors detect the presence of the sample container, and
   the determiner is configured to determine that the sample container is in an improper horizontal state of placement in which the sample container is placed on at least one of the first regulator, the second regulator, the third regulator, or the fourth regulator, in a horizontal posture in parallel to the horizontal plane when none of the first to fourth sensors detect the presence of the sample container, and the fifth sensor detects the presence of the sample container.

According to the present disclosure, it is possible to provide the sample container holding device that can determine the state of placement of the sample container and maintain that state when the sample container is placed in the proper state of placement.

### BRIEF DESCRIPTION OF THE DRAWINGS

In the accompanying drawings:
FIG. 1 is a top view illustrating a state in which a sample container is placed in a proper state of placement on a sample container holding device according to an embodiment of the present disclosure;
FIG. 2 is a partial cross-sectional front view of the state illustrated in FIG. 1;
FIG. 3 is a partial cross-sectional right side view of the state illustrated in FIG. 1;
FIG. 4 is a top view of the sample container holding device illustrated in FIG. 1 before placing the sample container;
FIG. 5 is a partial cross-sectional front view of the sample container holding device illustrated in FIG. 1 before placing the sample container;
FIG. 6 is a partial cross-sectional right side view of the sample container holding device illustrated in FIG. 1 before placing the sample container;
FIG. 7 is a top view illustrating a state in which the sample container is placed in an improper inclined state of placement on the sample container holding device illustrated in FIG. 1;
FIG. 8 is a partial cross-sectional front view of the state illustrated in FIG. 7;
FIG. 9 is a partial cross-sectional right side view of the state illustrated in FIG. 7;
FIG. 10 is a top view illustrating a state in which the sample container is placed in an improper horizontal state of placement on the sample container holding device illustrated in FIG. 1;
FIG. 11 is a partial cross-sectional front view of the state illustrated in FIG. 10;
FIG. 12 is an explanatory diagram that explains how to determine the state of placement of the sample container on the sample container holding device illustrated in FIG. 1; and
FIG. 13 is a block diagram of a sample analysis device according to an embodiment of the present disclosure.

### DETAILED DESCRIPTION

An embodiment of the present disclosure will be exemplarily described below in detail with reference to the drawings.

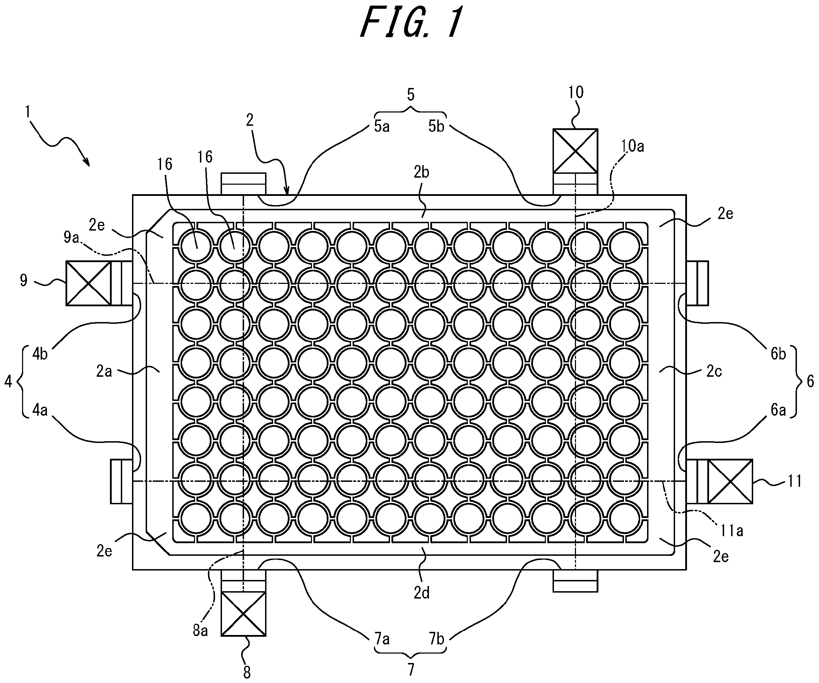

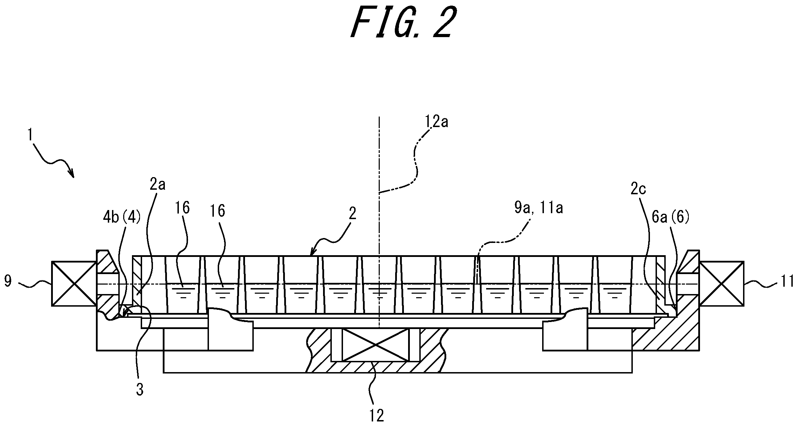

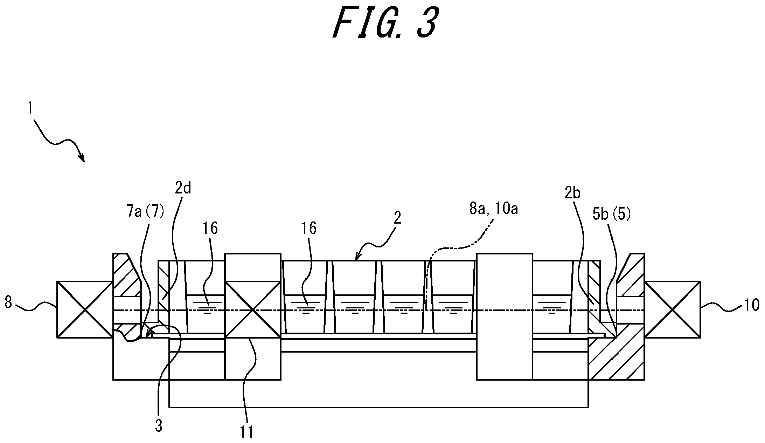

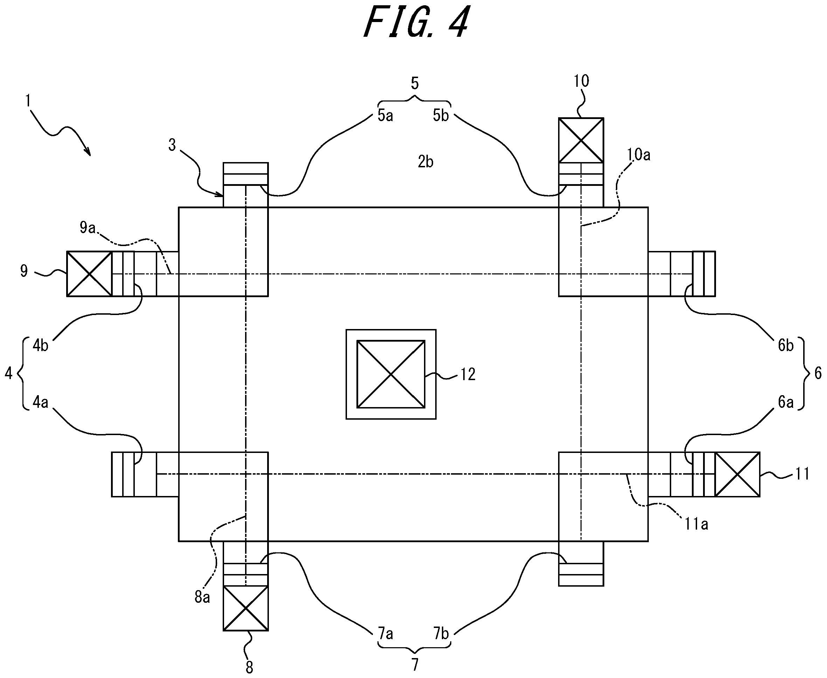

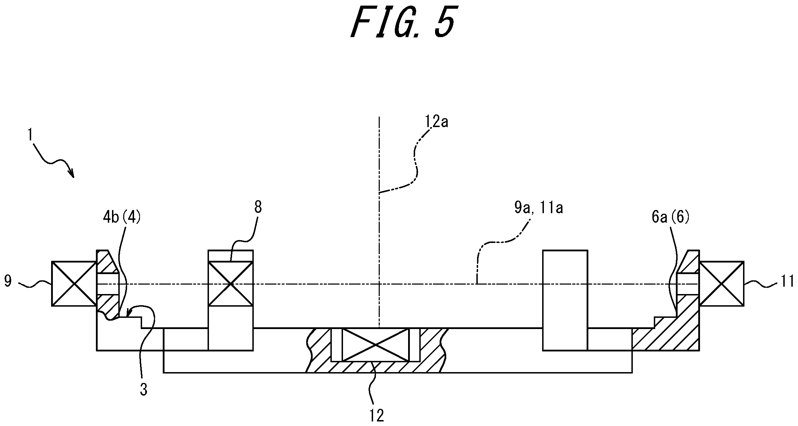

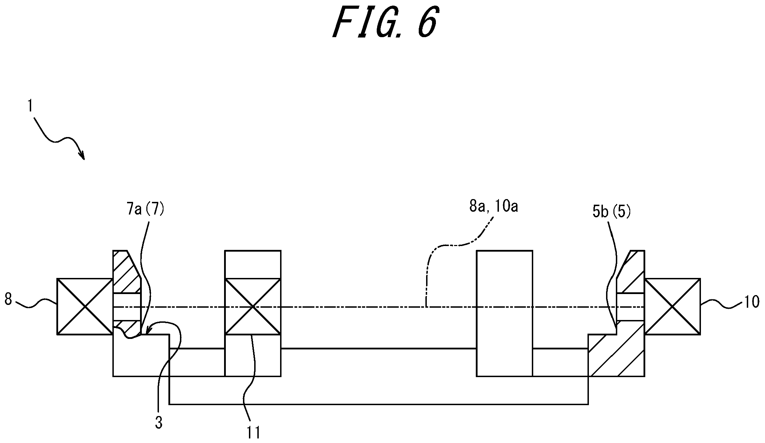

As illustrated in FIGS. 1 to 6, in the embodiment of the present disclosure, a sample container holding device 1 holds a sample container 2 in a rectangular shape with a first side edge 2a, a second side edge 2b, a third side edge 2c, and a fourth side edge 2d clockwise in this order in the top view. The sample container holding device 1 includes a mount 3, a first regulator 4, a second regulator 5, a third regulator 6, a fourth regulator 7, a first sensor 8 that detects the presence of the sample container 2 in a straight first detection line 8a, a second sensor 9 that detects the presence of the sample container 2 in a straight second detection line 9a, a third sensor 10 that detects the presence of the sample container 2 in a straight third detection line 10a, and a fourth sensor 11 that detects the presence of the sample container 2 in a straight fourth detection line 11a. In a proper state of placement (state illustrated in FIGS. 1 to 3) in which the sample container 2 is placed on the mount 3, without being placed on any of the first regulator 4, the second regulator 5, the third regulator 6, and the fourth regulator 7, the first regulator 4 is opposed to the left of the first side edge 2a, in order to regulate, by contact, leftward (leftward in FIG. 1) movement of the first side edge 2a from the third side edge 2c side to the first side edge 2a side along the second side edge 2b in the top view. The second regulator 5 is opposed to the rear of the second side edge 2b, in order to regulate, by contact, rearward (upward in FIG. 1) movement of the second side edge 2b from the fourth side edge 2d side to the second side edge 2b side along the first side edge 2a in the top view. The third regulator 6 is opposed to the right of the third side edge 2c, in order to regulate, by contact, rightward movement of the third side edge 2c. The fourth regulator 7 is opposed to the front of the fourth side edge 2d, in order to regulate, by contact, frontward movement of the fourth side edge 2d. The first regulator 4, the second regulator 5, the third regulator 6, and the fourth regulator 7 regulate the rotation of the sample container 2 with respect to the sample container holding device 1 in the top view. The first detection line 8a intersects (in this embodiment, intersects at right angle in the top view) front and rear surfaces of the first side edge 2a. The second detection line 9a intersects (in this embodiment, intersects at right angle in the top view) left and right surfaces of the second side edge 2b. The third detection line 10a intersects (in this embodiment, intersects at right angle in the top view) front and rear surfaces of the third side edge 2c. The fourth detection line 11a intersects (in this embodiment, intersects at right angle in the top view) left and right surfaces of the fourth side edge 2d.

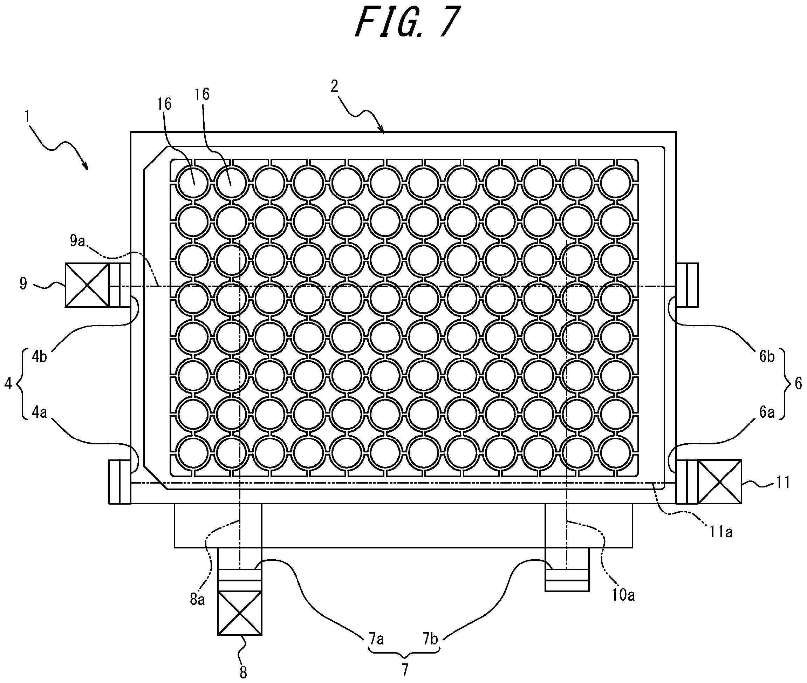

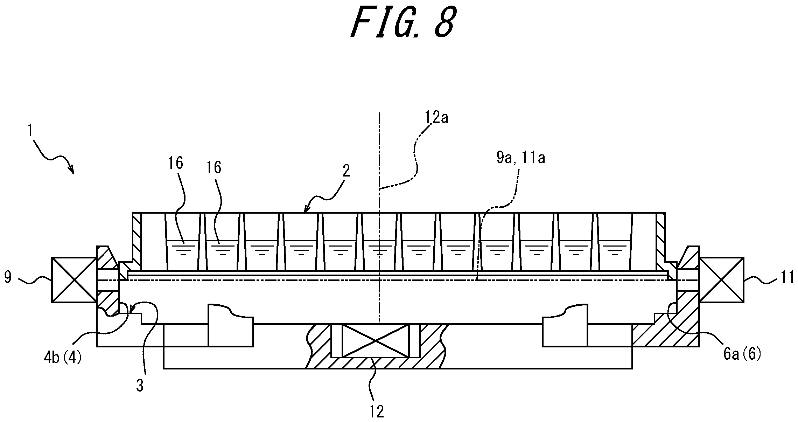

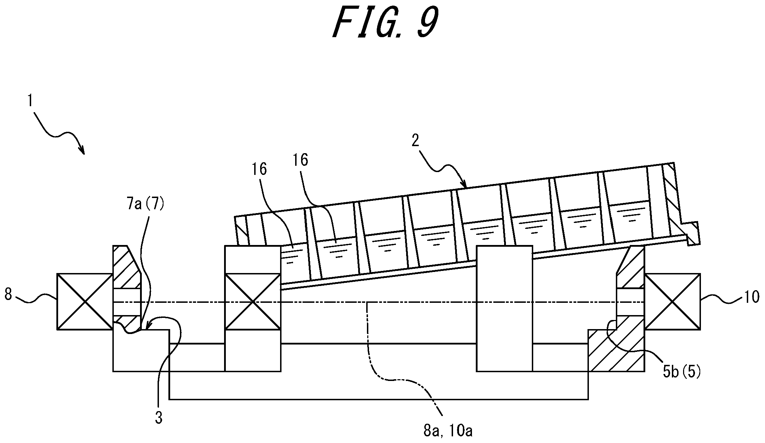

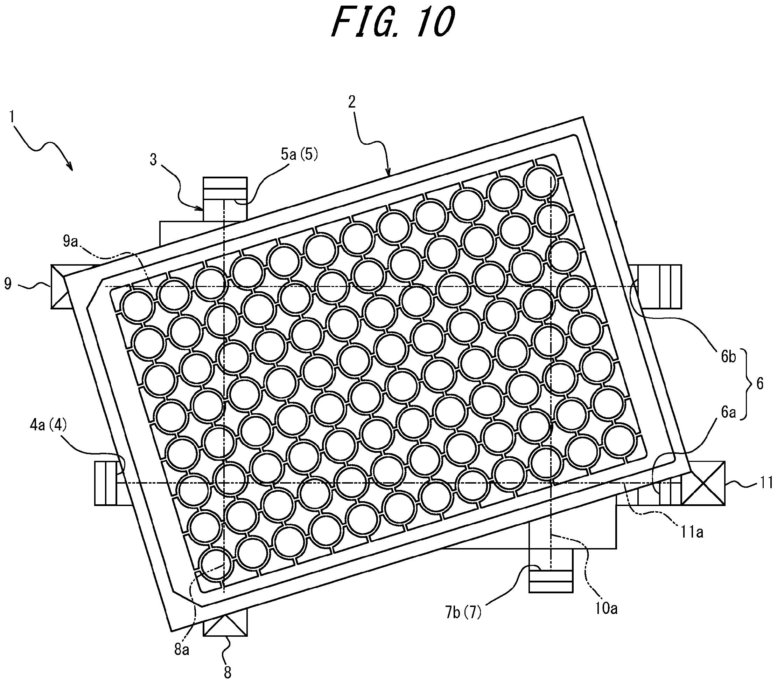

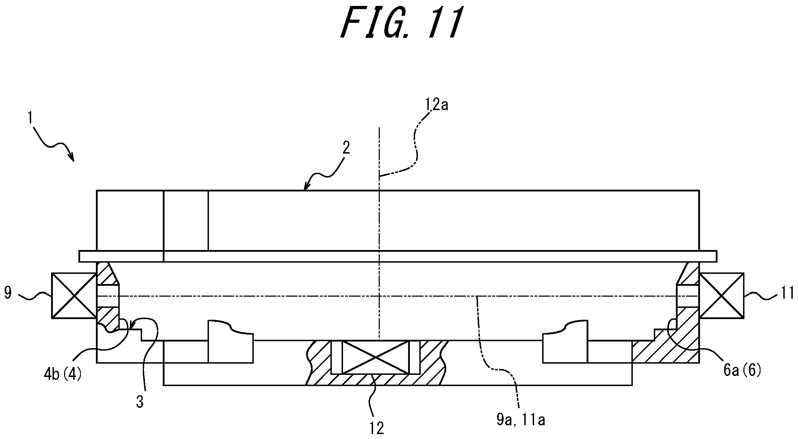

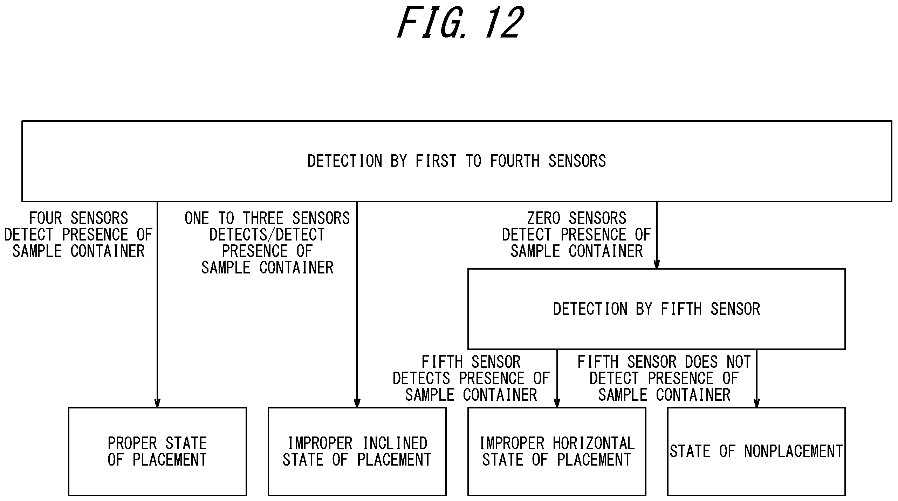

According to the above configuration, when the sample container 2 is placed on the sample container holding device 1 in the proper state of placement, the first regulator 4, the second regulator 5, the third regulator 6, and the fourth regulator 7 can maintain the sample container 2 in the proper state of placement. The first sensor 8, the second sensor 9, the third sensor 10, and the fourth sensor 11 can determine the state of placement of the sample container 2 on the sample container holding device 1. It is found that, when all of the first sensor 8, the second sensor 9, the third sensor 10, and the fourth sensor 11 detect the presence of the sample container 2, the sample container 2 is in the proper state of placement on the mount 3, without being placed on any of the first regulator 4, the second regulator 5, the third regulator 6, and the fourth regulator 7 (see FIG. 12). It is found that, when one to three of the first sensor 8, the second sensor 9, the third sensor 10, and the fourth sensor 11 detects/detect the presence of the sample container 2, the sample container 2 is in an improper inclined state of placement (a state illustrated in FIGS. 7 to 9, for example) in which the sample container 2 is placed on at least one of the first regulator 4, the second regulator 5, the third regulator 6, or the fourth regulator 7 in an inclined posture inclined with respect to the horizontal plane (see FIG. 12). It is found that, when none of the first sensor 8, the second sensor 9, the third sensor 10, and the fourth sensor 11 detect the presence of the sample container 2, the sample container 2 is in an improper horizontal state of placement (a state illustrated in FIGS. 10 to 11, for example) in which the sample container 2 is placed on at least one of the first regulator 4, the second regulator 5, the third regulator 6, or the fourth regulator 7 in a horizontal posture in parallel to the horizontal plane, or in a state of nonplacement (not illustrated) in which the sample container 2 is not placed on any of the first regulator 4, the second regulator 5, the third regulator 6, the fourth regulator 7, and the mount 3 (see FIG. 12). Therefore, it is possible to achieve the sample container holding device 1 that can determine the state of placement of the sample container 2 and maintain that state when the sample container 2 is placed in the proper state of placement.

The configuration in which, in the proper state of placement, the first regulator 4, the second regulator 5, the third regulator 6, and the fourth regulator 7 regulate the rotation of the sample container 2 with respect to the sample container holding device 1 in the top view is not particularly limited. For example, the first regulator 4 may have a first regulator front portion 4a, which is opposed to a front portion of the first side edge 2a in the proper state of placement, and a first regulator rear portion 4b, which is opposed to a rear portion of the first side edge 2a in the proper state of placement. Alternatively, the second regulator 5 may have a second regulator left portion 5a, which is opposed to a left portion of the second side edge 2b in the proper state of placement, and a second regulator right portion 5b, which is opposed to a right portion of the second side edge 2b in the proper state of placement. Alternatively, the third regulator 6 may have a third regulator front portion 6a, which is opposed to a front portion of the third side edge 2c in the proper state of placement, and a third regulator rear portion 6b, which is opposed to a rear portion of the third side edge 2c in the proper state of placement. Alternatively, the fourth regulator 7 may have a fourth regulator left portion 7a, which is opposed to a left portion of the fourth side edge 2d in the proper state of placement, and a fourth regulator right portion 7b, which is opposed to a right portion of the fourth side edge 2d in the proper state of placement.

The sample container holding device 1 includes a fifth sensor 12 that detects the presence of the sample container 2 in a straight fifth detection line 12a. In the proper state of placement, the fifth detection line 12a intersects (in this embodiment, intersects at right angle in the front view and the right side view) top and bottom surfaces of the sample container 2. According to the above configuration, it is found that, when none of the first sensor 8, the second sensor 9, the third sensor 10, the fourth sensor 11, and the fifth sensor 12 detect the presence of the sample container 2, the sample container 2 is in the state of nonplacement (see FIG. 12). It is found that, when none of the first sensor 8, the second sensor 9, the third sensor 10, and the fourth sensor 11 detect the presence of the sample container 2, and the fifth sensor 12 detects the presence of the sample container 2, the sample container 2 is in the improper horizontal state of placement (see FIG. 12).

Each of the first sensor 8, the second sensor 9, the third sensor 10, and the fourth sensor 11 is a reflective sensor. In the proper state of placement, the the first sensor 8, the second sensor 9, the third sensor 10, and the fourth sensor 11 are located clockwise or counterclockwise in this order in the top view, so as to be opposed to four corners 2e of the sample container 2. According to the above configuration, the reflective sensor (e.g., photoelectric sensor) is disposed in close proximity to each of the four corners 2e, thus improving detection accuracy.

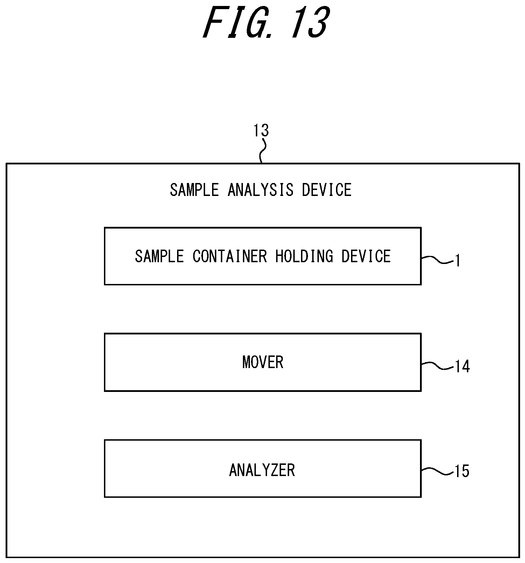

In the present embodiment, as illustrated in FIG. 13, a sample analysis device 13 includes the sample container holding device 1. According to the above configuration, it is possible to achieve the sample analysis device 13 that can determine the state of placement of the sample container 2 on the sample container holding device 1 and maintain that state when the sample container 2 is placed in the proper state of placement. By determining the state of placement, it is possible to prevent the occurrence of an abnormality in the sample analysis device 13 due to an improper state of placement or an abnormality in the sample container 2 itself that prevents the proper state of placement (e.g., damage to an outer circumference, contamination, or the like). The sample analysis device 13 can be suitably used, for example, as a drug discovery support device.

The sample analysis device 13 may be configured to stop so as not to perform the next operation when the state of placement is determined as being improper. According to the above configuration, the occurrence of an abnormality (e.g., damage to the sample analysis device 13) in the next operation due to the improper state of displacement can be prevented. The sample analysis device 13 may be configured to notify (e.g., issue an alarm) an operator (e.g., a placing entity), such as a person or a robot, of an abnormality when the state of placement is determined as being improper.

The sample analysis device 13 includes a mover 14 that moves the sample container holding device 1 on which the sample container 2 is placed. According to the above configuration, it is possible to prevent the occurrence of an abnormality during movement due to an improper state of placement or an abnormality in the sample container itself that prevents the proper state of placement.

The sample analysis device 13 includes an analyzer 15 that analyzes samples 16 contained in the sample container 2. The mover 14 carries, to the analyzer 15, the sample container holding device 1 on which the sample container 2 is placed. According to the above configuration, it is possible to prevent the occurrence of an abnormality during operations, such as carriage and analysis, due to an improper state of placement. In addition to carriage to the analyzer 15, the mover 14 may be configured to move the sample container holding device 1 on which the sample container 2 is placed, in order to move the sample container 2 during analysis in the analyzer 15. The mover 14 may also be configured to, without performing carriage to the analyzer 15, move the sample container holding device 1 on which the sample container 2 is placed, in order to move the sample container 2 during analysis in the analyzer 15.

The sample analysis device 13 includes a determiner that determines the state of placement of the sample container 2 on the sample container holding device 1. The determiner determines that the sample container 2 is in the proper state of placement when all of the first sensor 8, the second sensor 9, the third sensor 10, and the fourth sensor 11 detect the presence of the sample container 2. The determiner determines that the sample container 2 is in the improper inclined state of placement when one to three of the first sensor 8, the second sensor 9, the third sensor 10, and the fourth sensor 11 detects/detect the presence of the sample container 2. According to the above configuration, the state of placement of the sample container 2 can be easily determined by the determiner. The determiner can be configured with a computer.

The sample container holding device 1 includes the fifth sensor 12 that detects the presence of the sample container 2 in the straight fifth detection line 12a. In the proper state of placement, the fifth detection line 12a intersects the top and bottom surfaces of the sample container 2. The determiner determines that the sample container 2 is in the state of nonplacement when none of the first sensor 8, the second sensor 9, the third sensor 10, the fourth sensor 11, and the fifth sensor 12 detect the presence of the sample container 2. The determiner determines that the sample container 2 is in the improper horizontal state of placement when none of the first sensor 8, the second sensor 9, the third sensor 10, and the fourth sensor 11 detect the presence of the sample container 2, and the fifth sensor 12 detects the presence of the sample container 2. According to the above configuration, the state of placement of the sample container 2, including the state of nonplacement and the improper horizontal state of placement, can be easily determined by the determiner.

The samples 16 are, for example, cells, tissue, or the like. The sample container 2 is a microplate, but is not limited to this. The microplate is not particularly limited, but preferably has external dimensions recommended in the SBS standard. The analyzer 15 has an optical system that applies light (e.g., excitation light) to the samples 16 and detects light (e.g., light emitted by the samples 16 excited by the excitation light) from the samples 16, but is not limited to this. The optical system may be configured with a microscope. The sample analysis device 13 may be configured with a processing unit (computer) that generates images based on the detection results by the optical system. The mover 14 carries the sample container holding device 1 to the analyzer 15 while keeping the sample container 2 in a horizontal posture, but is not limited to this. The mover 14 can be configured, for example, with a linear motion mechanism, a rotation mechanism, or a combination thereof. A path of movement is not particularly limited and can have a horizontal path, a vertical path, or both. The sample analysis device 13 may be configured with a robot arm that places the sample container 2 on the sample container holding device 1, or may be configured that the sample container 2 is placed on the sample container holding device 1 by a person.

Although the embodiment of the present disclosure has been described above, the present disclosure is not limited to the aforementioned embodiment. The aforementioned embodiment can be modified in various ways without departing from the gist of the present disclosure.

## Claims

1. A sample container holding device configured to hold a sample container in a rectangular shape with first to fourth side edges clockwise in this order in top view, the sample container holding device comprising:
a mount;
first to fourth regulators;
a first sensor configured to detect presence of the sample container in a straight first detection line;
a second sensor configured to detect presence of the sample container in a straight second detection line;
a third sensor configured to detect presence of the sample container in a straight third detection line; and
a fourth sensor configured to detect presence of the sample container in a straight fourth detection line,
wherein in a proper state of placement in which the sample container is placed on the mount, without being placed on any of the first to fourth regulators,
the first regulator is configured to be opposed to a left of the first side edge, in order to regulate, by contact, leftward movement of the first side edge from the third side edge side to the first side edge side along the second side edge in the top view,
the second regulator is configured to be opposed to a rear of the second side edge, in order to regulate, by contact, rearward movement of the second side edge from the fourth side edge side to the second side edge side along the first side edge in the top view,
the third regulator is configured to be opposed to a right of the third side edge, in order to regulate, by contact, rightward movement of the third side edge,
the fourth regulator is configured to be opposed to a front of the fourth side edge, in order to regulate, by contact, frontward movement of the fourth side edge,
the first to fourth regulators are configured to regulate rotation of the sample container with respect to the sample container holding device in the top view,
the first detection line intersects front and rear surfaces of the first side edge,
the second detection line intersects left and right surfaces of the second side edge,
the third detection line intersects front and rear surfaces of the third side edge, and
the fourth detection line intersects left and right surfaces of the fourth side edge.

2. The sample container holding device according to claim 1, further comprising a fifth sensor configured to detect presence of the sample container in a straight fifth detection line,
wherein in the proper state of placement, the fifth detection line intersects top and bottom surfaces of the sample container.

3. The sample container holding device according to claim 1, wherein
each of the first to fourth sensors is a reflective sensor, and
in the proper state of placement, the first to fourth sensors are located clockwise or counterclockwise in this order in the top view, so as to be opposed to four corners of the sample container.

4. A sample analysis device comprising the sample container holding device according to claim 1.

5. The sample analysis device according to claim 4, comprising a mover configured to move the sample container holding device on which the sample container is placed.

6. The sample analysis device according to claim 5, comprising an analyzer configured to analyze a sample contained in the sample container,
wherein the mover is configured to carry, to the analyzer, the sample container holding device on which the sample container is placed.

7. The sample analysis device according to claim 4, comprising a determiner configured to determine a state of placement of the sample container on the sample container holding device, wherein
the determiner is configured to determine that the sample container is in the proper state of placement when all the first to fourth sensors detect the presence of the sample container, and
the determiner is configured to determine that the sample container is in an improper inclined state of placement in which the sample container is placed on at least one of the first regulator, the second regulator, the third regulator, or the fourth regulator in an inclined posture inclined with respect to a horizontal plane when one to three of the first to fourth sensors detects/detect the presence of the sample container.

8. The sample analysis device according to claim 7, wherein
the sample container holding device includes a fifth sensor configured to detect presence of the sample container in a straight fifth detection line,
in the proper state of placement, the fifth detection line intersects top and bottom surfaces of the sample container,
the determiner is configured to determine that the sample container is in a state of nonplacement in which the sample container is not placed on any of the first to fourth regulators and the mount when none of the first to fifth sensors detect the presence of the sample container, and
the determiner is configured to determine that the sample container is in an improper horizontal state of placement in which the sample container is placed on at least one of the first regulator, the second regulator, the third regulator, or the fourth regulator, in a horizontal posture in parallel to the horizontal plane when none of the first to fourth sensors detect the presence of the sample container, and the fifth sensor detects the presence of the sample container.
